# EUROPEAN PATENT SPECIFICATION

(11) **EP 2 276 091 B1**
(45) Date of publication and mention of the grant of the patent: **11.04.2018**
(21) Application number: 10169902.3
(22) Date of filing: 16.07.2010
(51) Int. Cl.: H01M 2/14, H01M 10/04

(54) **Rechargeable battery with an insulating layer for short-circuit protection**
Wiederaufladbare Batterie mit isolierender Schicht zur Vermeidung von Kurzschlüssen
Batterie rechargeable avec une couche isolante et protection contre les courts-circuits

(30) Priority: 16.07.2009 KR 20090065079
(43) Date of publication of application: 19.01.2011
(73) Proprietor: Samsung SDI Co., Ltd., Yongin-si, Gyeonggi-do (KR)
(72) Inventor: Kim, Cheonsoo, YONGIN-SI (KR)
(74) Representative: Santarelli

(56) References cited:
- EP-A1- 1 137 091
- EP-A1- 2 139 057
- US-A1- 2008 280 197

## Description

### BACKGROUND OF THE INVENTION

### 1. Field of the Invention

The embodiments of the present invention relate to a rechargeable battery.

### 2. Description of the Related Art

In general, a rechargeable battery includes an electrode assembly, electrolyte, and a can type or pouch type case accommodating the electrode assembly and the electrolyte. The electrode assembly is formed by stacking or winding a positive electrode plate, a negative electrode plate, and a separator disposed therebetween.

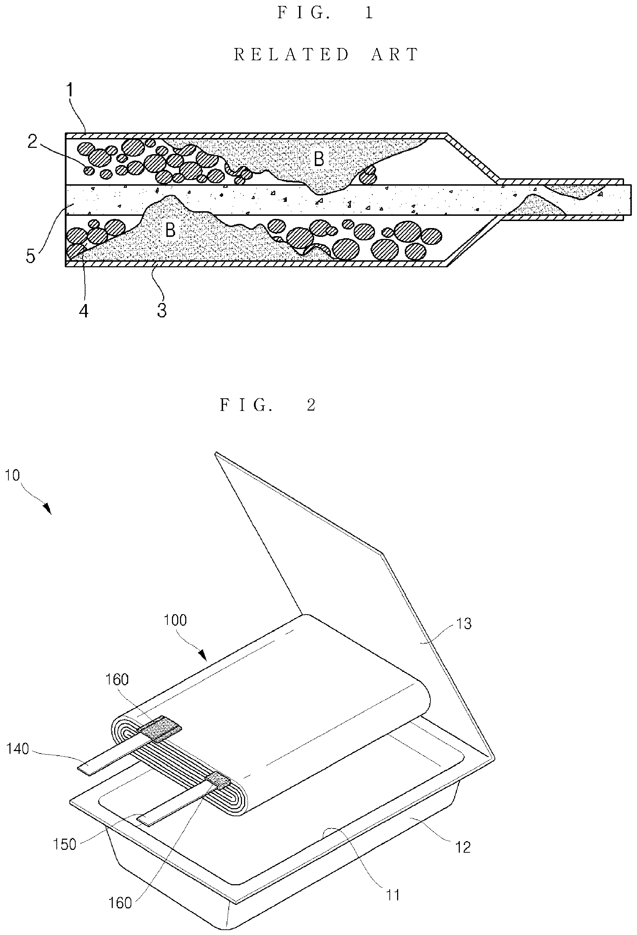

As shown in FIG. 1, in general, a positive electrode plate is provided by forming a coating portion 2 on at least one surface of a collector 1. A negative electrode plate is provided by forming a coating portion 4 on at least one surface of a collector 3. A surface of a collector where a coating portion is not formed is generally called a non-coating portion. Such non-coating portions are formed at both ends of a positive electrode plate and both ends of a negative electrode plate. To cut a positive electrode plate and a negative electrode plate, non-coating portions are generally cut. In this case, a burr 'B' may be formed, which is called a slitting burr, that can damage the separator 5, thus causing a short circuit.

Thus, it is difficult for the separator 5 to have a thickness as low as about 14 µm to about 18 µm. This is because when the separator 5 has a thickness ranging from about 14 µm to about 18 µm, the slitting burr 'B' should be controlled to within a height of about 7 µm or less, which is half the minimum thickness 14 µm of the separator 5, to prevent a short circuit. The number of grinding cycles of a slitting cutter is increased to control the height of the slitting burr 'B' to within about 7 µm, thus increasing manufacturing costs. In addition, frequent replacing of a slitting cutter causes process delay.

Accordingly, if a short circuit due to a slitting burr generated in cutting an electrode plate can be prevented, the thickness of the separator can be decreased. In such a case, battery capacity can be increased, and manufacturing costs can be reduced. US2008/0280197 A1 and EP 1 137 091 A1 disclose wound rechargeable batteries comprising insulating members at the front and rear ends of the electrodes prior to winding.

### SUMMARY OF THE INVENTION

Embodiments are therefore directed to a rechargeable battery that substantially overcomes one or more of the problems due to the limitations and disadvantages of the related art. An aspect provides a rechargeable battery that prevents a short circuit due to a slitting burr in cutting portions of a positive electrode and a negative electrode. Another aspect provides a rechargeable battery that prevents a short circuit due to a slitting burr in order to decrease the thickness of a separator. Another aspect provides a rechargeable battery that decreases the thickness of a separator in order to increase the capacity of the battery and reduce manufacturing costs.

At least one of the above and/or other features and advantages may be realized by providing a rechargeable battery including: a first electrode comprising a collector that has a coating portion and a non-coating portion disposed on at least one end; a second electrode comprising a collector that has a coating portion and a non-coating portion disposed on at least one end; and a separator disposed between the first electrode and the second electrode, wherein an insulating member which is (i) disposed between a burr region of the non-coating portion of the first electrode, and a region of the second electrode corresponding to the burr region, (ii) attached to the non-coating portion of the first electrode on the rear end of a structure formed by winding the first and second electrodes and the separator or (iii) attached to the second electrode on the rear end of a structure formed by winding the first and second electrodes and the separator.

The insulating member may be attached to at least one of the front end non-coating portion of the first electrode and the rear end non-coating portion of the first electrode. The insulating member may be attached to at least one of the regions of the second electrode corresponding to a front end non-coating portion and the rear end non-coating portion of the first electrode. The first electrode may be a positive electrode, and the second electrode may be a negative electrode. The first electrode may be a negative electrode, and the second electrode may be a positive electrode. The collector of the first electrode may be formed of aluminum. The collector of the second electrode may be formed of copper. The separator may have a thickness ranging from about 3 µm to about 14 µm. The insulating member may be formed of one of an organic material, an inorganic material, and a combination thereof. The insulating member may cover a lateral surface of the end of the first electrode collector. The insulating member may cover the non-coating portion without forming a space between the coating portion of the first electrode and the non-coating portion of the first electrode. The insulating member may cover the non-coating portion and an edge portion of the coating portion of the first electrode.

The insulating member according to (i) or (ii) may be attached to the non -coating portion of the first electrode along a length that is the same as that of the region of the second electrode corresponding to the non-coating portion of the first electrode. The insulating member according to (i) or (ii) may be attached to the non -coating portion of the first electrode along a length that is greater than that of the region of the second electrode corresponding to the non-coating portion of the first electrode.

The insulating member according to (iii) may be attached to the second electrode along a length corresponding to the non-coating portion of the first electrode. The insulating member according to (iii) may be attached to the second electrode along a length that is greater than the length corresponding to the non-coating portion of the first electrode. The insulating member according to (i) or (ii) may be attached to the non-coating portion of the first electrode along a length that is the same as that of the non-coating portion of the first electrode.

According to the invention, a rechargeable battery according to claim 1 is provided.
The insulating member is attached to the non-coating portion of the first electrode along a length that is greater than that of the non-coating portion of the first electrode, and the insulating member covers a lateral surface of the end of the first electrode collector.
According to an aspect of the invention, the first electrode is a positive electrode and the second electrode is a negative electrode, the insulating member is disposed on the non-coating portion of the first
electrode along a length that is greater than that of the non-coating portion of the electrode, in regions corresponding to the non-coating portion of the first electrode and the coating portion of the second electrode, and the insulating member covers a lateral surface of the end of the first electrode collector.

Additional aspects and/or advantages of the invention will be set forth in part in the description which follows and, in part, will be obvious from the description, or may be learned by practice of the invention.

### BRIEF DESCRIPTION OF THE DRAWINGS

These and/or other aspects and advantages of the invention will become apparent and more readily appreciated from the following description of the embodiments, taken in conjunction with the accompanying drawings of which:
FIG. 1 illustrates a cross-sectional view of a positive electrode plate, a negative electrode plate, and a separator in the related art;
FIG. 2 illustrates a perspective view of a rechargeable battery according to an embodiment;
FIG. 3 illustrates a cross-sectional view of an electrode assembly of a rechargeable battery according to the embodiment of FIG. 2;
FIG. 4 illustrates a schematic view of a state where an insulating member is attached, according to the embodiment of FIG. 2;
FIG. 5 illustrates a schematic view of a state where an insulating member is attached, according to another embodiment; and
FIG. 6 illustrates a graph of a relationship between a short circuit and the material of collectors of a positive electrode plate and a negative electrode plate according to the embodiments.

### DETAILED DESCRIPTION OF THE EMBODIMENTS

Reference will now be made in detail to the present embodiments of the present invention, examples of which are illustrated in the accompanying drawings, wherein like reference numerals refer to the like elements throughout. The embodiments are described below in order to explain the present invention by referring to the figures.

Referring to FIGs. 2 through 4, a rechargeable battery 10 according to an embodiment includes a first case 12 having an inner space 11 where an electrode assembly 100 is placed, and a second case 13 sealing the first case 12. The first and second cases 12 and 13 include an insulating layer, a metal layer, and a protective layer that are sequentially stacked. The insulating layer is the innermost layer, which has insulating and thermal adhesive properties. The metal layer prevents moisture ingress and electrolyte loss. The protective layer is the outermost layer, which protects the body of the rechargeable battery 10. However, the materials and shapes of the first and second cases 12 and 13 are not limited thereto.

The electrode assembly 100 is disposed in the first case 12. A positive electrode tab 140 and a negative electrode tab 150 of the electrode assembly 100 extend out from the first and second cases 12 and 13 that are sealed. After the electrode assembly 100 is disposed in the first case 12, electrolyte is injected, and heat and pressure are applied to a sealing surface along an edge of the inner space 11 to seal the first and second cases 12 and 13, thereby completing the rechargeable battery 10.

Although the illustrated rechargeable battery 10 of FIG. 2 is a pouch type battery having a pouch-shaped case, the present invention is not limited thereto. That is, a can type metal case may be provided.

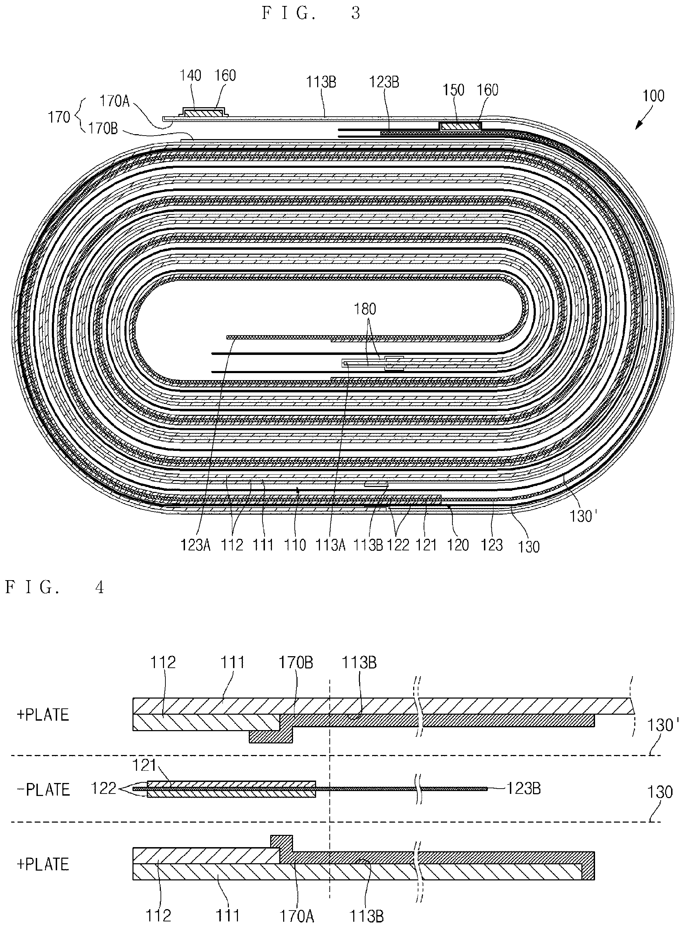

The electrode assembly 100 includes a positive electrode plate 110, a negative electrode plate 120, and a separator, collectively, 130 (130 and 130' in FIG. 4). The separator 130 is disposed between the positive electrode plate 110 and the negative electrode plate 120, and then, the positive electrode plate 110, the negative electrode plate 120, and the separator 130 are wound in a jelly roll shape.

The positive electrode plate 110 includes a positive electrode collector 111 formed of aluminum foil, and positive electrode coating portions 112 including a lithium based oxide as a main component. The positive electrode coating portions 112 are disposed on both surfaces of the positive electrode collector 111. Positive electrode non-coating portions 113A and 113B, without the positive electrode coating portion 112, are respectively disposed on the positive electrode collector 111 at the ends of the positive electrode plate 110. The positive electrode tab 140 is fixed to the positive electrode non-coating portion 113B through supersonic welding. The positive electrode tab 140 may be formed of metal such as nickel or a nickel alloy.

The negative electrode plate 120 includes a negative electrode collector 121 formed of copper foil, and negative electrode coating portions 122 including a carbon material as a main component. The negative electrode coating portions 122 are disposed on both surfaces of the negative electrode collector 121. Negative electrode non-coating portions 123A and 123B, without the negative electrode coating portion 122, are respectively disposed on the negative electrode collector 121 at the ends of the negative electrode plate 120. The negative electrode tab 150 is fixed to the negative electrode non-coating portion 123B through supersonic welding. The negative electrode tab 150 may be formed of metal such as nickel or a nickel alloy.

The separator 130 is disposed between the positive electrode plate 110 and the negative electrode plate 120 to insulate the positive electrode plate 110 and the negative electrode plate 120. The separator 130 is formed of film including one of polyethylene, polypropylene, and a combination thereof. The separator 130 is longer than the positive electrode plate 110 and the negative electrode plate 120, and thus the separator 130 protrudes from the upper and lower sides of the positive electrode plate 110 and the negative electrode plate 120.

An insulating tape is used as an insulating member for the electrode assembly 100. Protective tapes 160 and lamination tapes 170 and 180 are used as the insulating tapes. The insulating tape may be formed of one of an organic material, an inorganic material, and a combination thereof.

For example, the insulating tape may be formed of a material selected from the group consisting of polyimide, liquid crystal polymer (LCP), polyphenylene sulfide (PPS), polybutylene terephthalate (PBT), polyethylene terephthalate (PET), polyethylene (PE), polypropylene (PP), polyvinyl chloride (PVC), polyacetate, and fluoropolymers such as polytetrafluoroethylene (PTFE), tetrafluoroethylene-hexafluoropropylene (FEP) copolymer, ethylene-tetrafluoroethylene (ETFE) copolymer, tetrafluoroethylene-perfluoroalkylvinylether (PFA) copolymer, and polyvinylidene fluoride (PVDF). The material of the insulating tape may be any material having high stability against electrolytes or lithium ions.

The protective tapes 160 surround regions where the positive electrode tab 140 and the negative electrode tab 150 are welded to the positive electrode plate 110 and the negative electrode plate 120, respectively. Thus, the protective tapes 160 protect the separator 130 against protruding parts of the positive electrode tab 140 and the negative electrode tab 150 of the positive electrode plate 110 and the negative electrode plate 120.

The lamination tapes 170 and 180 are attached to both surfaces of the electrode collectors 111 and 121 of the electrode plates 110 and 120 in start and end regions where the forming of the coating portions 112 and 122 start and end. Thus, the lamination tapes 170 and 180 protect the separator 130 from the start and end regions protruding when the coating portions 112 and 122 are formed.

Particularly, in a case where an electrical short occurs in regions corresponding to the non-coating portion of the first electrode and the coating portion of the second electrode, a high risk of the fire may result. Thus, it is highly required to provide an insulation member to the regions corresponding to the non-coating portion of the first electrode and the coating portion of the second electrode.

When the positive electrode plate 110, the separator 130, and the negative electrode plate 120 are wound in a jelly roll shape, the positive electrode non-coating portions 113A and 113B and the negative electrode non-coating portions 123A and 123B are disposed at respective ends of the positive electrode plate 110 and the negative electrode plate 120. In this case, parts of the positive electrode non-coating portions, collectively 113, and the negative electrode non-coating portions, collectively 123, where the winding of the positive electrode plate 110, the separator 130, and the negative electrode plate 120 starts are referred to as a front end positive electrode non-coating portion 113A and a front end negative electrode non-coating portion 123A, and parts where the winding of the positive electrode plate 110, the separator 130, and the negative electrode plate 120 ends are referred to as a rear end positive electrode non-coating portion 113B and a rear end negative electrode non-coating portion 123B.

Regions corresponding to the front ends of the positive electrode plate 110 and the negative electrode plate 120 are referred to as inner portions of the electrode assembly 100, and regions corresponding to the rear ends of the positive electrode plate 110 and the negative electrode plate 120 are referred to as outer portions of the electrode assembly 100. In the present embodiment, the positive electrode tab 140 and the negative electrode tab 150 are disposed in the outer portions of the electrode assembly 100.

The positive electrode tab 140 is welded to the rear end positive electrode non-coating portion 113B, and the protective tape 160 is attached to the positive electrode tab 140. The negative electrode tab 150 is welded to the rear end negative electrode non-coating portion 123B, and the protective tape 160 is attached to the negative electrode tab 150. However, the positions of the positive electrode tab 140 and the negative electrode tab 150 are not limited to the rear end of the electrode assembly 100.

The lamination tape 170, attached to the inner surface of the rear end positive electrode non-coating portion 113B of the positive electrode plate 110, is a lamination tape 170A that is attached to a boundary between the positive electrode coating portion 112 and the rear end positive electrode non-coating portion 113B. The lamination tape 170A extends to an end of the rear end positive electrode non-coating portion 113B of the positive electrode plate 110. Thus, the lamination tape 170A of the positive electrode plate 110 corresponds to the outer surface of the rear end negative electrode non-coating portion 123B of the negative electrode plate 120 with the separator 130 disposed therebetween.

The lamination tape 170, attached to the outer surface of the positive electrode plate 110 corresponding to the inner surface of the rear end negative electrode non-coating portion 123B of the negative electrode plate 120, is a lamination tape 170B that is attached to an edge of the rear end positive electrode non-coating portion 113B of the positive electrode plate 110. The lamination tape 170B of the rear end positive electrode non-coating portion 113B of the positive electrode plate 110 corresponds to the inner surface of the rear end negative electrode non-coating portion 123B of the negative electrode plate 120 with the separator 130' disposed therebetween.

In the positive electrode plate 110 and the negative electrode plate 120, or the rear end positive electrode non-coating portion 113B and the rear end negative electrode non-coating portion 123B, the "outer surface" denotes a surface facing the outside of the electrode assembly 100, and the "inner surface" denotes a surface facing the inside of the electrode assembly 100. As a result, the lamination tape 170A is attached to the inner surface of the rear end positive electrode non-coating portion 113B of the positive electrode plate 110, and the lamination tape 170B is attached to the outer surface of the rear end positive electrode non-coating portion 113B. The lamination tapes 170A and 170B have at least the same length as that of the rear end negative electrode non-coating portion 123B of the negative electrode plate 120.

Thus, even when the separators 130 and 130' are damaged by a burr formed at the rear end positive electrode non-coating portion 113B of the positive electrode plate 110, the rear end positive electrode non-coating portion 113B of the positive electrode plate 110 is prevented from contacting the negative electrode coating portion 122 and the rear end negative electrode non-coating portion 123B of the negative electrode plate 120, thus preventing a short circuit between the positive electrode plate 110 and the negative electrode plate 120. When the lamination tape 170A is attached to the rear end non-coating portion 113B of the positive electrode plate 110 along a length that is greater than that of the rear end non-coating portion 113B of the positive electrode 110, the lamination tape 170A may be formed to cover a lateral surface of the rear end of the positive electrode collector111. In this case, the lamination tape 170A prevent a short circuit between the positive electrode plate 110 and the negative electrode plate 120 due to a damage of the separator 130 by covering a burr that may be generated at the lateral surface of the rear end of the positive electrode collector 111.

In the inner portion of the electrode assembly 100, the lamination tapes 180 may be attached to both surfaces of the front end positive electrode non-coating portion 113A of the positive electrode plate 110. The lamination tape 180 has at least the same length as the front end positive electrode non-coating portion 113A of the positive electrode plate 110. The lamination tapes 180 prevent the front end positive electrode non-coating portion 113A of the positive electrode plate 110 from contacting the negative electrode coating portion 122 and the front end negative electrode non-coating portion 123A of the negative electrode plate 120, thus preventing a short circuit between the positive electrode plate 110 and the negative electrode plate 120. When the lamination tape 180 is attached to the front end non-coating portion 113A of the positive electrode plate 110 along a length that is greater than that of the front end non-coating portion 113A of the positive electrode 110, the lamination tape 180 may be formed to cover a lateral surface of the front end of the positive electrode collector 111. In this case, the lamination tape 180 prevent a short circuit between the positive electrode plate 110 and the negative electrode plate 120 due to a damage of the separator 130 and 130' by covering a burr that may be generated at the lateral surface of the front end of the positive electrode collector 111.

Hereinafter, a rechargeable battery will now be described according to another embodiment. The rechargeable battery according to the present embodiment has the same configuration as the previous one. Further, the electrode assembly 100 has the same configuration as that of the present embodiment. Thus, like reference numerals denote like elements, and a detailed description thereof will be omitted.

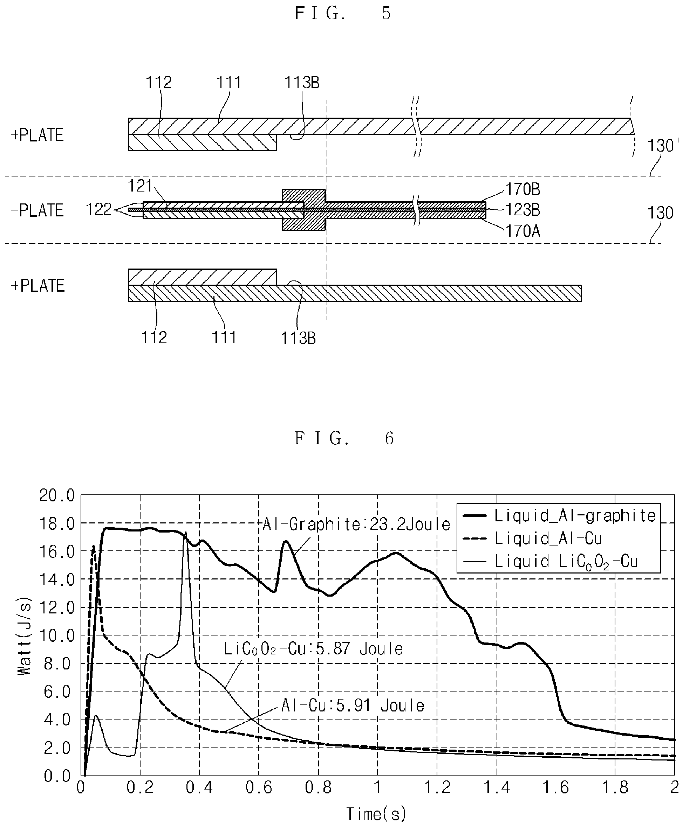

Referring to FIG. 5, in a rechargeable battery according to this embodiment, the lamination tapes 170A and 170B are attached to both surfaces of the rear end negative electrode non-coating portion 123B of the negative electrode plate 120 of the electrode assembly 100. The lamination tapes 170A and 170B are attached along at least the same length as that of both the negative electrode collector 121 and the negative electrode coating portion 122.

Thus, even when the separators 130 and 130' are damaged by a burr formed at the rear end positive electrode non-coating portion 113B of the positive electrode plate 110, the rear end positive electrode non-coating portion 113B of the positive electrode plate 110 is prevented from contacting the negative electrode coating portion 122 and the rear end negative electrode non-coating portion 123B of the negative electrode plate 120, thus preventing a short circuit between the positive electrode plate 110 and the negative electrode plate 120. when the lamination tape 170A and 170B are attached to the rear end non-coating portion 123B of the negative electrode plate 120 along a length that is greater than that of the rear end non-coating portion 123B of the negative electrode 120, the lamination tape 170A and 170B may be formed to cover a lateral surface of the rear end of the negative electrode collector 121. In this case, the lamination tape 170A and 170B prevent a short circuit between the positive electrode plate 110 and the negative electrode plate 120 due to a damage of the separator 130 and 130' by covering a burr that may be generated at the lateral surface of the rear end of the positive electrode collector 121.

If the insulation member needs to be attached to only one of positive and negative electrode sides, however, it is more advantageous to attach the insulation member to the positive electrode side than to the negative electrode side in view of processing efficiency. In detail, an amount of the insulation member required to allow the regions corresponding to the non-coating portion of the first electrode and the coating portion of the second electrode to be equipped with the insulation member in any case, even in a case where a distortion may occur to the electrode assembly, is smaller when the insulation member is attached to the positive electrode side than when the insulation member is attached to the negative electrode side.

FIG. 6 illustrates a graph of power versus time according to the material of a collector of a positive electrode plate and the material of a collector of a negative electrode plate when liquid electrolyte is used, according to the embodiments. Referring to FIG. 6, when the collector of the positive electrode plate is formed of aluminium, and the collector of the negative electrode plate is formed of copper, short circuiting between the positive electrode plate and the negative electrode plate can be minimized.

According to the above embodiments, the negative electrode coating portion 122 and the rear end negative electrode non-coating portion 123B are prevented from contacting a burr of the rear end positive electrode non-coating portion 113B of the positive electrode plate 110 at the rear end of the negative electrode plate 120. Thus, even when the separators 130 and 130' are formed in a thin film structure, a short circuit between the positive electrode plate 110 and the negative electrode plate 120 can be prevented.

In a related art prismatic type rechargeable battery using liquid electrolyte, it is difficult for a separator to have a thickness of about 16 µm or less. Further, even when a related art pouch type rechargeable battery uses polymer electrolyte, it is difficult for a separator to have a thickness of about 12 µm or less. In the related art case, the positive electrode collector 111 formed of aluminum has a thickness of about 12 µm, and the positive electrode coating portion 112 has a thickness of about 60 µm. In addition, the negative electrode collector 121 formed of copper has a thickness of about 8 µm, and the negative electrode coating portion 122 has a thickness of about 60 µm.

However, when a prismatic type rechargeable battery uses liquid electrolyte according to these embodiments, the separators 130 and 130' may have a thickness of about 14 µm or less. Further, when a pouch type rechargeable battery uses polymer electrolyte according to these embodiments, the separators 130 and 130' may have a thickness of about 12 µm or less. That is, according to these embodiments, the negative electrode coating portion 122 and the rear end negative electrode non-coating portion 123B of the negative electrode plate 120 are not in direct contact with the rear end positive electrode non-coating portion 113B of the positive electrode plate 110 even when the separators 130 and 130' are damaged by a burr of the rear end positive electrode non-coating portion 113B of the positive electrode plate 110. Thus, the thickness of the separators 130 and 130' can be decreased.

The separators 130 and 130' may have a thickness ranging from about 3 µm to about 14 µm. When a separator has a thickness of about 3 µm or less, it is difficult for the separator to perform its function of allowing electron transfer of ions simultaneously with insulating of a positive electrode plate and a negative electrode plate. Thus, a separator may have a thickness of about 3 µm or more. When a separator has a thickness of about 14 µm or more, battery capacity is not considerably increased as compared with a separator having a thickness of about 16 µm.

According to the embodiments, the insulating member is provided to cover a burr of the positive electrode non-coating portion damaging the separator, so that the thickness of the separator can be reduced without losing its function of allowing electron transfer of ions simultaneously with insulating of the positive electrode plate and the negative electrode plate. As described above, a short circuit due to a slitting burr is prevented in a cut portion of the positive electrode plate or the negative electrode plate. In particular, the negative electrode coating portion and the negative electrode non-coating portion are prevented from contacting the positive electrode non-coating portion that is a cut portion of the positive electrode plate, so as to prevent a short circuit. Therefore, this technique for preventing a short circuit due to a slitting burr can lead to a reduction of the thickness of the separator, thereby increasing battery capacity and reducing manufacturing costs.

Although a few embodiments of the present invention have been shown and described, it would be appreciated by those skilled in the art that changes may be made in this embodiment without departing from the principles and spirit of the invention, as defined in the claims.

## Claims

1. A rechargeable battery comprising:
a first electrode (110) comprising a collector (111) that has a coating portion (112) and a non-coating portion (113B) disposed on at least one end;
a second electrode (120) comprising a collector (121) that has a coating portion (122) and a non-coating portion (123B) disposed on at least one end;
a separator (130) disposed between the first electrode and the second electrode;
**characterized in that** an insulating member (170) is attached to the non-coating portion of the first electrode on the rear end of a structure formed by winding the first and second electrodes and the separator, along a length that is greater than that of the non-coating portion of the first electrode, the insulating member covers the non-coating portion without forming a space between the coating portion of the first electrode and the non-coating portion of the first electrode, and the insulating member covers a lateral surface of the end of the first electrode collector.

2. The rechargeable battery as claimed in claim 1, wherein the first electrode is a positive electrode, the second electrode is a negative electrode, and the insulating member is attached to the non-coating portion of the first electrode along a length that is greater than that of the non-coating portion of the electrode, in regions corresponding to the non-coating portion of the first electrode and the coating portion of the second electrode.

3. The rechargeable battery as claimed in claim 1 or 2, wherein the insulating member is attached to at least one of regions of the second electrode corresponding to a front end non-coating portion and a rear end non-coating portion of the first electrode.

4. The rechargeable battery as claimed in claim 1, wherein the insulating member is attached to the non-coating portion of the first electrode along a length that is the same as or greater than that of the region of the second electrode corresponding to the non-coating portion of the first electrode.

5. The rechargeable battery as claimed in claim 1 wherein the insulating member covers the non-coating portion and an edge portion of the coating portion of the first electrode.

6. The rechargeable battery as claimed in anyone of claims 1 to 5, wherein the first electrode is a positive electrode, and the second electrode is a negative electrode.

7. The rechargeable battery as claimed in anyone of claims 1 to 6, wherein the separator has a thickness ranging from about 3 µm to about 14 µm.

8. The rechargeable battery as claimed in anyone of claims 1 to 7, wherein the insulating member is formed of a material selected from the materials consisting of an organic material, an inorganic material, and a combination thereof.

## Patentansprüche

1. Wiederaufladbare Batterie umfassend:
eine erste Elektrode (110) umfassend einen Kollektor (111) mit einem Beschichtungsabschnitt (112) und einem Nichtbeschichtungsabschnitt (113B) an mindestens einem Ende;
eine zweite Elektrode (120) umfassend einen Kollektor (121) mit einem Beschichtungsabschnitt (122) und einem Nichtbeschichtungsabschnitt (123B) an mindestens einem Ende;
einen Separator (130), der zwischen der ersten Elektrode und der zweiten Elektrode angeordnet ist;
**dadurch gekennzeichnet, dass** ein Isolationselement (170) an dem Nichtbeschichtungsabschnitt der ersten Elektrode am hinteren Ende einer Struktur, diedurch Wickeln der ersten und zweiten Elektrode und des Separators ausgebildet wird, auf einer Länge angebracht ist, die länger ist als die des Nichtbeschichtungsabschnitts der ersten Elektrode, das Isolationselement den Nichtbeschichtungsabschnitt bedeckt, ohne einen Zwischenraum zwischen dem Beschichtungsabschnitt der ersten Elektrode und dem Nichtbeschichtungsabschnitt der ersten Elektrode auszubilden, und das Isolationselement eine Seitenfläche des Endes des Kollektors der ersten Elektrode bedeckt.

2. Wiederaufladbare Batterie nach Anspruch 1, wobei die erste Elektrode eine positive Elektrode ist, die zweite Elektrode eine negative Elektrode ist und das Isolationselement an dem Nichtbeschichtungsabschnitt der ersten Elektrode auf einer Länge angebracht ist, die länger ist als die des Nichtbeschichtungsabschnitts der Elektrode, in Bereichen, die dem Nichtbeschichtungsabschnitt der ersten Elektrode und dem Beschichtungsabschnitt der zweiten Elektrode entsprechen.

3. Wiederaufladbare Batterie nach Anspruch 1 oder 2, wobei das Isolationselement an mindestens einem von Bereichen der zweiten Elektrode angebracht ist, die einem Nichtbeschichtungsabschnitt am vorderen Ende und einem Nichtbeschichtungsabschnitt am hinteren Ende der ersten Elektrode entsprechen.

4. Wiederaufladbare Batterie nach Anspruch 1, wobei das Isolationselement an dem Nichtbeschichtungsabschnitt der ersten Elektrode auf einer Länge angebracht ist, die gleich der oder länger als die des Bereichs der zweiten Elektrode, der dem Nichtbeschichtungsabschnitt der ersten Elektrode entspricht, ist.

5. Wiederaufladbare Batterie nach Anspruch 1, wobei das Isolationselement den Nichtbeschichtungsabschnitt und einen Randabschnitt des Beschichtungsabschnitts der ersten Elektrode bedeckt.

6. Wiederaufladbare Batterie nach einem der Ansprüche 1 bis 5, wobei die erste Elektrode eine positive Elektrode ist und die zweite Elektrode eine negative Elektrode ist.

7. Wiederaufladbare Batterie nach einem der Ansprüche 1 bis 6, wobei der Separator eine Dicke von ca. 3 µm bis ca. 14 µm aufweist.

8. Wiederaufladbare Batterie nach einem der Ansprüche 1 bis 7, wobei das Isolationselement aus einem Material ausgebildet ist, das aus den Materialien ausgewählt wird, die aus einem organischen Material, einem anorganischen Material und einer Kombination daraus bestehen.

## Revendications

1. Batterie rechargeable comprenant :
une première électrode (110) comprenant un collecteur (111) qui a une partie de revêtement (112) et une partie sans revêtement (113B) disposée sur au moins une extrémité ;
une seconde électrode (120) comprenant un collecteur (121) qui a une partie de revêtement (122) et une partie sans revêtement (123B) disposée sur au moins une extrémité ;
un séparateur (130) disposé entre la première électrode et la seconde électrode ;
**caractérisée en ce qu'**un élément isolant (170) est fixé sur la partie sans revêtement de la première électrode sur l'extrémité arrière d'une structure formée en enroulant les première et seconde électrodes et le séparateur, le long d'une longueur qui est supérieure à celle de la partie sans revêtement de la première électrode, l'élément isolant recouvre la partie sans revêtement sans former d'espace entre la partie de revêtement de la première électrode et la partie sans revêtement de la première électrode, et l'élément isolant recouvre une surface latérale de l'extrémité du collecteur de première électrode.

2. Batterie rechargeable selon la revendication 1, dans laquelle la première électrode est une électrode positive, la seconde électrode est une électrode négative, et l'élément isolant est fixé à la partie sans revêtement de la première électrode le long d'une longueur qui est supérieure à celle de la partie sans revêtement de l'électrode, dans des régions correspondant à la partie sans revêtement de la première électrode et la partie de revêtement de la seconde électrode.

3. Batterie rechargeable selon la revendication 1 ou 2, dans laquelle l'élément isolant est fixé à au moins l'une des régions de la seconde électrode correspondant à une partie sans revêtement d'extrémité avant et une partie sans revêtement d'extrémité arrière de la première électrode.

4. Batterie rechargeable selon la revendication 1, dans laquelle l'élément isolant est fixé à la partie sans revêtement de la première électrode le long d'une longueur qui est égale ou supérieure à celle de la région de la seconde électrode correspondant à la partie sans revêtement de la première électrode.

5. Batterie rechargeable selon la revendication 1, dans laquelle l'élément isolant recouvre la partie sans revêtement et une partie de bord de la partie de revêtement de la première électrode.

6. Batterie rechargeable selon l'une quelconque des revendications 1 à 5, dans laquelle la première électrode est une électrode positive et la seconde électrode est une électrode négative.

7. Batterie rechargeable selon l'une quelconque des revendications 1 à 6, dans laquelle le séparateur a une épaisseur allant d'environ 3 µm à environ 14 µm.

8. Batterie rechargeable selon l'une quelconque des revendications 1 à 7, dans laquelle l'élément isolant est formé avec un matériau sélectionné parmi les matériaux comprenant un matériau organique, un matériau non organique et leur combinaison.
